# EUROPEAN PATENT APPLICATION

(11) **EP 3 181 896 A1**
(43) Date of publication of application: **21.06.2017**
(21) Application number: 15201294.4
(22) Date of filing: 18.12.2015
(51) Int. Cl.: F03D 7/02

(54) **CALIBRATING A YAW SYSTEM OF A WIND TURBINE**

(71) Applicant: Siemens Aktiengesellschaft, 80333 München (DE)
(72) Inventor: Egedal, Per, 7400 Herning (DK); Enevoldsen, Peder Bay, 7100 Vejle (DK); Vad, Claus, 7400 Herning (DK)

(57) **Abstract**

A method is proposed for calibrating a yaw system of a wind turbine, comprising the following steps:
- determining a true sun position (530) in relation to the position of the wind turbine,
- calibrating the yaw system
- based on the true sun position (530) and
- based on turbine specific information.

Further, a wind turbine and a device as well as a computer program product and a computer readable medium are suggested for performing said method.

## Description

The invention relates to a method, a wind turbine and to a device for calibrating a yaw system of a wind turbine. In addition, an according computer program product and a computer readable medium are suggested.

A wind turbine in operation will not always experience wind perpendicular to a rotor plane. When the rotor plane (which is also referred to as heading) of a wind turbine is not perpendicular to the wind, the efficiency will decrease. Therefore, actual wind turbines comprise a yaw system designed to automatically adjust their heading, like, e.g., rotating the rotor plane perpendicular to the incoming wind or to maintain an angle relative to the wind to maximize the surface area of the turbine rotor ("yawing").

Usually, the yaw system is part of a nacelle, which may be involved in a yawing movement, i.e. being rotatable mounted on top of a tower via at least one yaw bearing. A rotor is attached to an upwind side of the nacelle. The rotor is coupled via a drive train to a generator housed inside the nacelle. The rotor includes a central rotor hub and a plurality of blades mounted to and extending radially from the rotor hub defining the rotor plane.

It is important for wind power plant operators to know an actual position or direction of the rotor plane or heading of the respective wind turbine, the plane or heading being correlated with an actual position or direction of the nacelle. The actual direction of the nacelle is also referred to as a yaw direction or a yaw position or, in relation to a predefined direction (e.g. a cardinal direction), as a yaw angle. Alternatively the yaw angle may be defined as the direction of the nacelle in relation of the direction of the incoming wind.

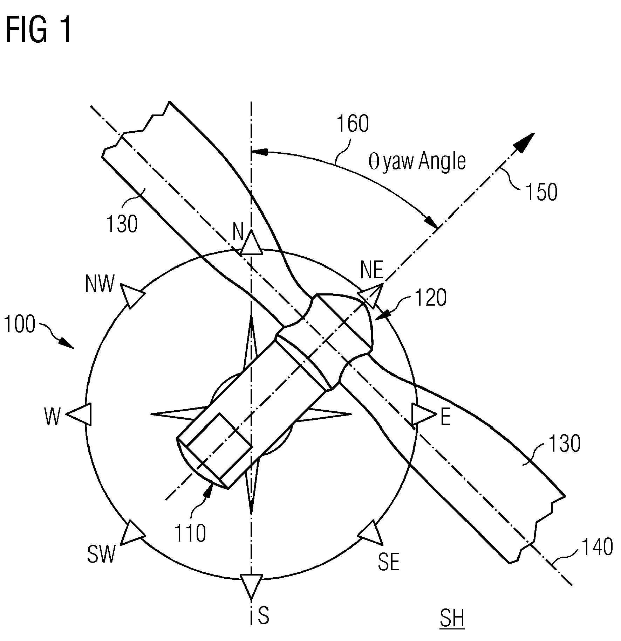

Fig.1 shows in a schematically top view an exemplary scenario of a wind turbine 100 in relation to the well known cardinal points or compass points which are indicated as a compass rose in the background of Fig.1. A rotor hub 120 including a plurality of blades 130 defining a rotor plane 140 is mounted at the upwind side of a nacelle 110. According to the scenario of Fig.1, an actual yaw direction 150 (which is also referred to as "compass heading") of the wind turbine 100, i.e. the actual direction of the nacelle 110 points towards the cardinal direction "North East" or "NE". As exemplarily shown in Fig.1, an absolute yaw angle "θYawAngle" is referencing the actual yaw direction 150 of the wind turbine in relation towards the cardinal direction "North" or "N". The absolute yaw angle θYawAngle is indicated by an arrow 160, wherein θYawAngle = 45°.

Information concerning the yaw direction is a common used basis for analyzing data concerning a wind turbine or performing sector management control like, e.g.,
- site wind mapping and historical data collection on wind patterns,
- limiting wind turbine noise by avoiding operation in wind directions where noise generation is excessive,
- automatic curtailment and regulation of a wind turbine at yaw angles where significant wind turbulence might be present,
- prevention of shadow flicker/light pollution for neighboring residents or businesses at certain times of day and yaw angles,
- remote manual control of a wind turbine yaw position,
- efficiency testing and wind turbine power curve validation, or
- safe positioning of the rotor during ice conditions when service teams are approaching.

In order to determine, e.g., an absolute yaw angle, a wind turbine may be equipped with a yaw encoder, measuring the relative yaw direction in relation to a stationary object like, e.g., a tower being secured to a foundation at ground level. The yaw encoder is typically calibrated by determining a reference yaw direction or reference yaw angle after finalization of the wind turbine installation (also referred to as "initial calibration").

In some scenarios the initial calibration of the yaw angle is incorrect or less accurate due to applying a rough estimate or rule of thumb to determine a cardinal direction as a basis or reference for the yaw angel calibration.

A further reason for an inaccurate yaw angle calibration is a wind turbine installation based on a design including powerful permanent magnets, eliminating the possibility of applying magnetic compasses to determine the yaw direction or yaw angle. A magnetic compass, as a further general disadvantage, comprises inaccurateness per se, in particular at installations located at high geographic latitudes.

Alternatively, compasses based on GPS (Global Positioning System) or other satellite-based positioning systems have been applied to determine the reference yaw direction of the wind turbine. However, these systems may require special skills by specific service teams and service time being restricted to specific test and measurement applications.

Further on, the aforementioned systems may bear the risk that a specific yaw position or yaw direction offset may be overwritten or deleted in a wind turbine configuration like, e.g., a software parameter list. There might be also a risk of the yaw sensor being changed during service of damage. In such kind of situation there might be a risk of a not properly calibrated yaw position and that a wrong yaw position might be read out.

The object is thus to overcome the aforementioned disadvantages and in particular to provide an improved approach for optimizing the yaw system of a wind turbine.

This problem is solved according to the features of the independent claims. Further embodiments result from the depending claims.

In order to overcome this problem, a method is provided for calibrating a yaw system of a wind turbine, comprising the following steps:
- determining a true sun position in relation to the position of the wind turbine,
- calibrating the yaw system
   - based on the true sun position and
   - based on turbine specific information.

Determining the true position of the sun means deriving information representing an actual position of the sun at the sky. This information may also represent a sun position vector, i.e., information representing a direction towards the true sun position in relation to, e.g., the geographic position of the wind turbine.

Calibrating means determining a reference yaw direction or a reference yaw angle based on, e.g., sun position information. As an example the cardinal direction "North" may be determined as reference yaw direction based on the proposed solution.

The proposed solution provides an economical and in particular a reasonable priced method for calibrating or recalibrating the yaw system of a wind turbine.

It is one aspect of the invention presented that the true sun position might be used as a reliable and absolute direction indicator during calibration of the yaw system.

In an embodiment, the turbine specific information comprises at least one out of the following:
- information representing a geographic position of the wind turbine,
- calendar information,
- calibration information.

A geographic position may be defined by using a geographic coordinate system. As an example, the geographic position may be defined according to
- a Geographic Latitude and Longitude coordinate system, or
- an Universal Transverse Mercator (UTM) coordinate system, or
- an Universal Polar Stereographic (UPS) coordinate system.

Calendar information may be local day and local time according to the geographic position of the individual wind turbine.

Calibration information may be already existing information, e.g.
- representing a current configuration of the yaw system, and/or
- representing a result of a calibration step executed in the past wherein the results of the calibration step have been stored in a memory of the wind turbine.

As an example, the aforementioned turbine specific information may be assigned to a lookup table stored in a memory of the wind turbine.

In another embodiment, the method comprises
- determining an estimated sun position in relation to the position of the wind turbine based on a current configuration of the yaw system,
- verifying the estimated sun position with the true sun position,
- calibrating the yaw system based on the result of the verification.

In an embodiment the true sun position is determined with the help of at least one sun position sensor.

In a further embodiment,
- the at least one sun position sensor comprising
   - at least one light sensitive sensor measuring an intensity of light and
   - at least one shadow emitting element,
- wherein the at least one sun position sensor is arranged such that the at least one light sensitive sensor measures an intensity of light dependent on the actual position of the sun and dependent on an individual design and orientation of the at least one shadow emitting element.

In a next embodiment,
- the at least one sun position sensor is arranged on top of a nacelle or in front of a rotor hub of the wind turbine,
- the nacelle is yawed according to a yaw direction representing the estimated sun position,
- verifying the yaw direction with the true sun position with the help of the sun position sensor,
- calibrating the yaw system based on the result of the verification.

It is also an embodiment that the method is executed during an unwinding procedure of the nacelle.

Pursuant to another embodiment, during determination of the true sun position disturbing effects are minimized or removed.

Disturbing effects might be blade shadow effects during normal operation of the wind turbine as well as night- and cloud effects being removed or minimized by using appropriate algorithms or filter.

The problem stated above is also solved by a wind turbine comprising
- a yaw system,
- a processing unit that is arranged for
   - determining a true sun position in relation to the position of the wind turbine,
   - calibrating the yaw system
      - based on the true sun position and
      - based on turbine specific information.

The problem stated above is also solved by a device comprising and/or being associated with a processor unit and/or hard-wired circuit and/or a logic device that is arranged such that the method as described herein is executable thereon.

Said processing unit may comprise at least one of the following: a processor, a microcontroller, a hard-wired circuit, an ASIC, an FPGA, a logic device.

The solution provided herein further comprises a computer program product directly loadable into a memory of a digital computer, comprising software code portions for performing the steps of the method as described herein.

In addition, the problem stated above is solved by a computer-readable medium, e.g., storage of any kind, having computer-executable instructions adapted to cause a computer system to perform the method as described herein.

The solution provided herein further comprises at least one sun position sensor for determining a true or actual position of the sun, the at least one sun position sensor comprising
- at least one light sensitive sensor measuring an intensity of light and
- at least one shadow emitting element,

wherein the at least one sun position sensor is arranged such that the at least one light sensitive sensor measures an intensity of light dependent on the actual position of the sun and dependent on an individual design and orientation of the at least one shadow emitting element.

Embodiments of the invention are shown and illustrated in the following figures:
- Fig.1: shows in a schematically top view an exemplary scenario of a wind turbine in relation to the well known cardinal points;
- Fig.2A and Fig.2B: are showing in a schematically view one possible embodiment of a sun position sensor;
- Fig.3A and Fig.3B: are visualizing two possible scenarios of the sun position sensor 200 as shown in Fig.2 dependent on the position of the sun;
- Fig.4A and Fig.4B: are visualizing an alternative embodiment of a sun position sensor according to the proposed solution;
- Fig.5: is showing in a top view several exemplary operating scenarios of a sun position sensor as shown in Fig.4;
- Fig.6: shows in a block diagram an exemplary signal flow chart implementing the proposed solution.

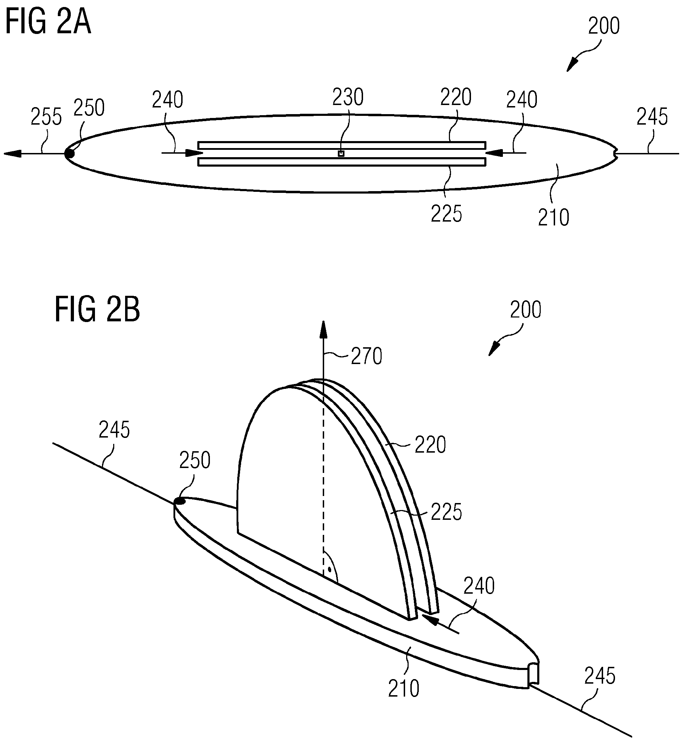

Fig.2 shows in a schematically view one possible embodiment of a sun position sensor 200 which might be used according to the proposed solution. Thereby, Fig.2A visualizes a top view and Fig.2B visualizes a perspective view of the sun position sensor 200. The sun position sensor 200 comprises a ground plate 210 together with a fixed first and second shadow emitting element 220, 225, each in form of a semicircular plate being arranged orthogonal to the ground plate 210. Thereby, the shadow emitting elements 220, 225 are arranged such providing a channel (indicated by arrows 240) extending into a longitudinal direction or axis 245 along the ground plate 210, suitable for guiding light sent out from a source through the channel 240. In the special center of the channel 240, i.e. in the center of the arrangement of the two shadow emitting elements 220, 225 a light sensitive sensor 230 is arranged on the ground plate 210.

One possible embodiment of the light sensitive sensor 230 is a photosensitive resistor.

Alternatively a CCD sensor (Charge-Coupled Device) may be used.

The ground plate 210 may further comprise a marker 250 being aligned with the longitudinal axis 245 indicating a current direction (also referred to as "orientation") of the sun position sensor 200. In Fig.2A the current direction/orientation of the sun position sensor 200 is indicated by an arrow 255.

According to the proposed solution, the sun position sensor 200 can be rotated according to a rotation axis arranged in a perpendicular order to the ground plate 200. In Fig.2B the rotation axis is indicated by an arrow 270.

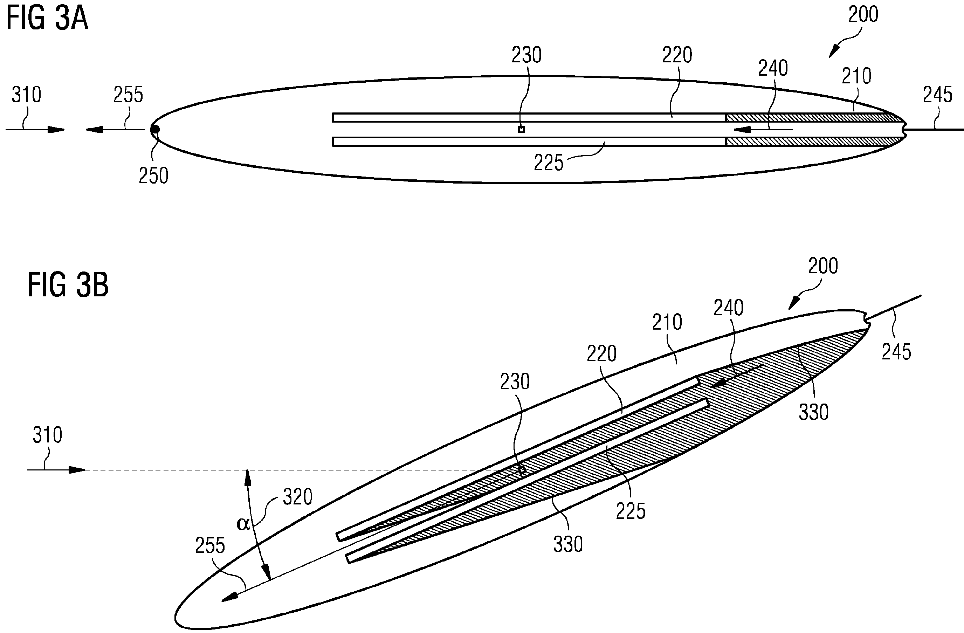

Fig.3 visualizes two possible scenarios of the sun position sensor 200 as shown in Fig.2 dependent on the current orientation of the sun position sensor 200 in relation to the position of a source of light like, e.g., the position of the sun. In Fig.3 the same reference numbers are mainly used as shown in Fig.2. In the scenarios of Fig.3 light emitted by an imaginary sun is indicated by an arrow 310. In other words, a true position of the sun is correlated with the emitted light 310.

According to the scenario as shown in Fig.3A the sun position sensor 200 is totally aligned with the true position of the sun 310, i.e., the orientation 255 of the sun position sensor 200 exactly points towards the position of the sun. As a consequence, no shadow is emitted by the shadow emitting elements 220, 225 towards the channel 240, i.e. a maximum amount of light is guided through the channel 240 between both shadow emitting elements 220, 225. Thus, a maximum amount of light or a maximum intensity of light is measured or registered by the light sensitive sensor 230. Correspondingly, a minimum amount of "shadow intensity" is measured or registered by the light sensitive sensor 230.

In contrast, according to the exemplary scenario as shown in Fig.3B, due to an exemplary anticlockwise rotation of the sun position sensor 200 there is a misalignment between the orientation 255 of the sun position sensor 200 and the true position of the sun 310. The misalignment is indicated by an angle "α" - indicated by an arrow 320. Due to the misalignment, a shadow 330 is emitted by the shadow emitting element 220 towards the channel 240. As the shadow 330 is covering the light sensitive sensor 230 the measured intensity of light measured by the light sensitive sensor 230 is less than the measured light intensity of Fig.3A.

That measured or registered difference of intensity of light dependent on the orientation of the sun position sensor 200 is the basis for determining the true position of the sun according to the proposed solution.

According to one possible embodiment of the proposed solution the sun position sensor 200 as shown in Fig. 2 and Fig.3, is mounted on top of a nacelle of a wind turbine. Thereby, the sun position sensor 200 is mounted in a way that the orientation 255 of the sun position sensor 200 is in line with the heading or yaw direction of the wind turbine.

The following steps may be applied for calibrating a yaw position of the wind turbine according to the proposed solution:
In a first step a position of the sun may be estimated ("estimated sun position") based on current configuration information/data of the wind turbine. These configuration data may also include current calibration data which might be information resulting from a former calibration step executed in the past.

In a second step the wind turbine is yawed according to the estimated sun position, i.e. the nacelle including a rotor hub of the wind turbine is yawed in a way that the heading or yaw direction of the wind turbine is line with the estimated sun position. Consequently, due to the fixed attachment, the orientation of the sun position senor 200 is changing accordingly.

In a third step the estimated sun position is verified with the true sun position by analyzing the registered intensity of light measured by the sun position sensor 200. For that, further movement, i.e., yawing of the nacelle in both possible yawing directions might be necessary to determine a maximum of the measured intensity of light or to determine a minimum of shadow covering the light sensitive sensor 230. By identifying a maximum of light intensity (alternatively a minimum of shadow intensity) the true position of light may be determined.

In case of misalignment between the estimated and the true position of the sun a new calibration or re-calibration of the yaw system may be initiated during a forth step.

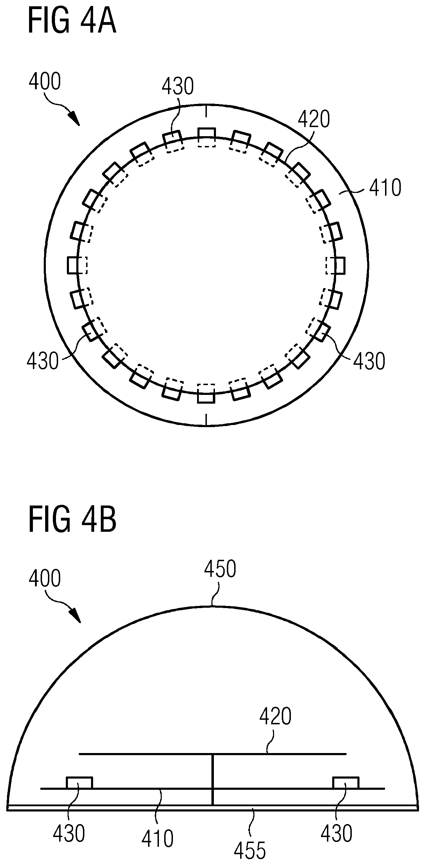

Fig.4 visualizes an alternative embodiment of a sun position sensor 400 according to the proposed solution. Thereby, Fig.4A shows a top view and Fig.4B shows a side view of the sun position sensor 400. On a ground plate 410, which might be circular, a circle of several light sensitive sensors 430 are placed according to a ring arrangement. Further, a circular shadow emitting element 420 like, e.g., a circular disk or plate is arranged such that a certain part of a light sensitive area of all the light sensitive sensors 430 is covered or shadowed when looking down directly from the top in an isometric view. According to the example of Fig.4A about 50% of the light sensitive area of each of the light sensitive sensors 430 is covered or shadowed by the circular disk 420. The circle of light sensitive sensors 430 as well as the circular disk 420 is covered by a hemispherical transparent capping 450 fixed to fastening plate 455.

The composition or design of the sun position sensor 400 is such that as the sun moves over the sky and/or the wind turbine yaws, the shadow emitted or projected by the circular disk 420 will cover at least partly the light sensitive area of a certain number of the light sensitive sensors 430 while the remaining light sensitive sensors 430 will be fully exposed to sunlight. Based on such available information, i.e. which of the light sensitive sensors 430 are covered by an individual percentage of shadow ("shadow coverage") or not it is possible by data processing to derive a heading vector ("sun position vector") indicating the direction towards the true position of the sun.

Further information might be necessary for an accurate determination of the true position of the sun like, e.g., at least one out of the following:
- information representing a geographic position of the wind turbine,
- calendar information (e.g., day and local time),
- current calibration information.

According to an advanced embodiment, continuous measurements, i.e. continuous analyzing of the shadow coverage of the light sensitive sensors 430 will allow an averaging of the results and thus providing a very accurate derivation of the true position of the sun.

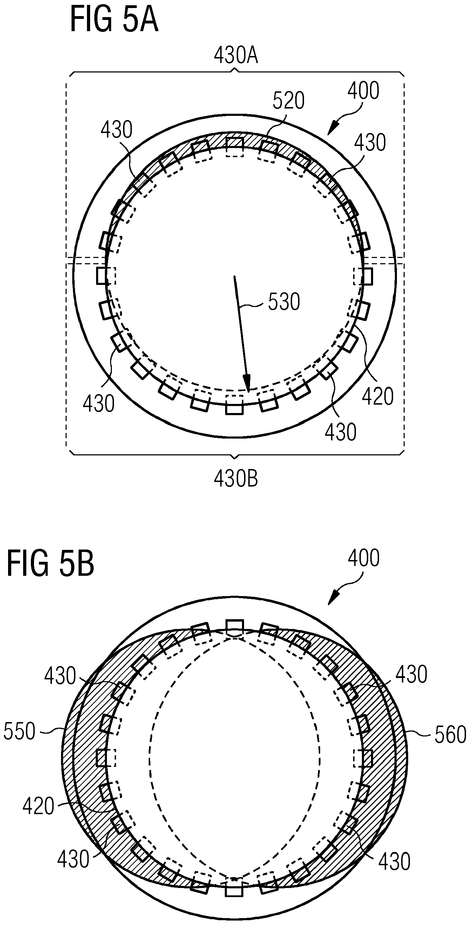

Fig.5 shows in a top view several exemplary operating scenarios of a sun position sensor 400 as shown in Fig.4. Thereby, it is assumed that the sun position sensor 400 is mounted on top of a nacelle of a north-faced wind turbine being geographically located on the northern hemisphere of the earth.

The exemplary operating scenario of Fig.5A is representing a chronological situation around mid-day. Due to the shadow typically emitted by the circular disk 420 at the time of mid-day a first number (indicated by a reference number 430A) of the light sensitive sensors is covered at least partly by the shadow (indicated by an arrow 520) and a second number (indicated by a reference number 430B) of the light sensitive sensors are not covered by the shadow 520. Based on individual measurement signals provided by the light sensitive sensors 430 an actual sun position vector (indicated by an arrow 530) can be derived pointing towards a true position of the sun.

Further to that, as already explained above, an estimated sun position can be determined based on available (e.g. stored) wind turbine specific information.

In case of a misalignment between the true sun position and the estimated sun position a new calibration or re-calibration of the yaw system can be initiated.

Two further exemplary scenarios are shown in Fig.5B wherein the corresponding "shadow-scenario" at morning time is indicated by an arrow 550 and the corresponding "shadow-scenario" at evening time is indicated by an arrow 560.

As an advantage, by using a sun position sensor 400 as shown in Fig.4 and Fig.5 mounted on top of the nacelle no yawing of the wind turbine is necessary for determining the true position of the sun. Thus the provided solution may be executed during normal operation of the wind turbine without switching to a different operating mode like, e.g., to a turbine specific calibration mode.

According to a further possible embodiment of the provided solution (not shown) the sun position sensor as shown in Fig.4 and Fig.5 may be arranged in front of the rotor hub, in particular may be fixed on a rotating spinner of the rotor hub ("spinner mounted sensor") to avoid a possible direction misalignment during mounting. Scanning continuously the intensity of light during rotation of the rotor hub and correlating to azimuth and sun position a precise yaw direction may be derived. Compared to the scenario as shown in Fig.2 and Fig.3 there is no need for a precise positioning of the sun position sensor because always axis symmetrical data is collected. As a further advantage against the sun position sensor 200 of Fig.2 and Fig.3 the spinner mounted sensor is able to operate in a wider angle than when just pointing towards the sun.

The basic principle of all possible embodiments of the proposed solution is based on a measurement of ambient light intensity. Thus, during processing the resulting measurement signals it has to be distinguished between normal daylight, electrical lights sources and direct sunlight wherein the intensity of light is the desired parameter to be used to control wind turbine operation.

Further disturbing effects may be caused by lightning in connection with electrical wires associated with the sensors. These disturbing effects may be avoided by using, e.g., optical fiber cables.

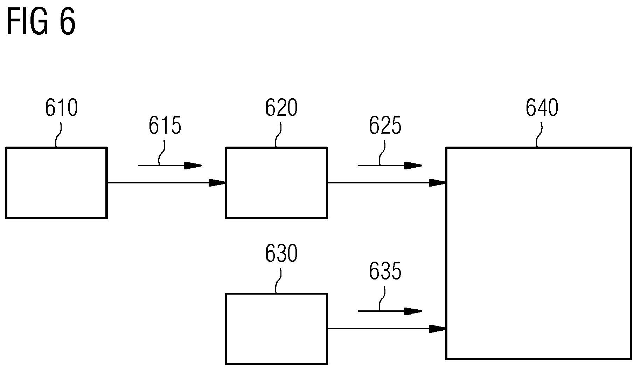

Fig.6 shows in a block diagram an exemplary signal flow chart implementing the proposed solution.

A block 610 is representing an operational step of measuring the current light intensity by using a sun position sensor according to the proposed solution. A resulting measurement signal 615 is provided to a processing step (represented by a block 620) applying algorithms for filtering or removing disturbing effects like, e.g., blade shadow effects, night- and clouds-effects.

A resulting signal 625, representing, e.g., a derived true sun position is forwarded to a further operational step indicated by a block 640.

A further block 630 is representing an operational step of determining an estimated sun position based on, e.g.,
- geographic information of the wind turbine, and/or
- local date, local time of day, and/or
- current yaw position and/or current yaw calibration.

The estimated sun position 635 is provided to the operational step 640 representing an operational step of calculating a possible misalignment between the provided true sun position 625 and the provided estimated sun position 635. Thereby, in case of a calculated misalignment between both sun positions 625, 635 the operational step 640 also represents a further calibration step or re-calibration step based on the calculated misalignment.

Although the present invention has been disclosed in the form of preferred embodiments and variations thereon, it will be understood that numerous additional modifications and variations could be made thereto without departing from the scope of the invention.

## Claims

1. Method for calibrating a yaw system of a wind turbine, comprising the following steps:
- determining a true sun position (530) in relation to the position of the wind turbine,
- calibrating the yaw system
- based on the true sun position (530) and
- based on turbine specific information.

2. The method according to claim 1, wherein
the turbine specific information comprises at least one out of the following:
- information representing a geographic position of the wind turbine,
- calendar information,
- calibration information.

3. The method according to any of the preceding claims, further comprising:
- determining an estimated sun position in relation to the position of the wind turbine based on a current configuration of the yaw system,
- verifying the estimated sun position with the true sun position,
- calibrating the yaw system based on the result of the verification.

4. The method according to any of the preceding claims,
wherein,
the true sun position is determined with the help of at least one sun position sensor (200, 400).

5. The method according to any of the preceding claims, wherein
- the at least one sun position sensor (200, 400) comprising
- at least one light sensitive sensor (230, 430) measuring an intensity of light and
- at least one shadow emitting element (220, 225, 420),
- wherein the true sun position sensor (200, 400) is arranged such that the at least one light sensitive sensor (230, 430) measures an intensity of light dependent on the actual position of the sun and dependent on an individual design and orientation of the at least one shadow emitting element (220, 225, 420).

6. The method according to claim 5, wherein
- the at least one sun position sensor (200) is arranged on top of a nacelle or in front of a rotor hub of the wind turbine,
- the nacelle is yawed according to a yaw direction representing the estimated sun position,
- verifying the yaw direction with the true sun position with the help of the sun position sensor,
- calibrating the yaw system based on the result of the verification.

7. The method according to any of the preceding claims,
wherein
the method is executed during an unwinding procedure of the nacelle.

8. The method according to any of the preceding claims,
wherein
during determination of the true sun position (530) disturbing effects are minimized or removed.

9. A wind turbine, comprising
- a yaw system,
- a processing unit that is arranged for
- determining a true sun position (530) in relation to the position of the wind turbine,
- calibrating the yaw system
- based on the true sun position (530) and
- based on turbine specific information.

10. A device comprising and/or being associated with a processor unit and/or hard-wired circuit and/or a logic device that is arranged such that the method according to any of the preceding claims 1 to 8 is executable thereon.

11. A computer program product directly loadable into a memory of a digital computer, comprising software code portions for performing the steps of the method according to any of the claims 1 to 8.

12. A computer readable medium, having computer-executable instructions adapted to cause a computer system to perform the steps of the method according to any of the claims 1 to 8.
